# EUROPEAN PATENT SPECIFICATION

(11) **EP 1 326 767 B1**
(45) Date of publication and mention of the grant of the patent: **14.12.2005**
(21) Application number: 01975102.3
(22) Date of filing: 05.10.2001
(51) Int. Cl.: B60R 21/18

(54) **A SAFETY DEVICE FOR A VEHICLE SEAT**
SICHERHEITSVORRICHTUNG FÜR EINEN FAHRZEUGSITZ
DISPOSITIF DE SECURITE POUR SIEGE DE VEHICULE

(30) Priority: 19.10.2000 GB 0025699
(43) Date of publication of application: 16.07.2003
(73) Proprietor: AUTOLIV DEVELOPMENT AB, 447 83 Vargarda (SE)
(72) Inventor: ROUILLER, Antoine, F-31200 Toulouse (FR); BOULEY, Olivier, F-92700 Colombes (FR)
(74) Representative: Parry, Simon James
(86) International application number: PCT/SE2001/002171
(87) International publication number: WO 2002/032727

(56) References cited:
- WO-A1-97/06983
- WO-A1-97/47498
- DE-A1- 4 306 528
- DE-A1- 19 724 191
- DE-A1- 19 725 558

## Description

**THE PRESENT INVENTION** relates to a safety device, and more paiticularly relates to a safety device for use in a motor vehicle such as a motor car.

It has been proposed previously to provide a safety device in the form of an inflatable element mounted on part of a safety-belt to be worn by an of a vehicle.

WO97/06983 shows an inflatable element incorporated into the lap strap of a three-point safety-belt, the inflatable element being in the form of a braided tube, the length of which decreases as the diameter increases on inflation thereof. The inflated tube serves to pretension the safety-belt, but the inflated tube restricts forward motion of an occupant of the seat, and serves to distribute crash loads over a relatively large pelvic area.

DE-19724191 which shows a vehicle safety device according to the preamble of claim 1 also shows an arrangement in which an air-bag is provided which, in the uninflated state, is located to one side of a seat of the occupant. The air-bag is provided with a plurality of rings which slide along a guide forming part of the safety-belt system. On inflation of the air-bag, the rings extend along the guide and thus the air-bag becomes located generally in front of the occupant of the seat. Should, however, a ring "jam" or be unable to move along the guide, the inflated air-bag may be in an inappropriate position.

DE-19725558A shows a further arrangement in which a lap strap is formed to be inflatable. The inflated lap strap is located in front of the occupant of the seat.

A problem with an inflatable element mounted on a lap strap, as shown in WO97/06983 and DE-19725558A is that when the lap strap is manufactured, the size of the person to utilise the lap strap is not known. The lap strap may be used by a child or very small adult, and then the length of the lap strap actually used will only be slightly greater than the length of the lap strap than would extend from the conventional anchorage which anchors one end of the lap strap to the vehicle, and the buckle that receives a tongue provided on the lap strap. In such a case, it would be preferable for the inflatable part of the lap strap to be located directly in front of the child or young adult when the strap is in position. However, if the inflatable element is mounted on the lap strap in a position that is suitable for such a child or young adult, if the lap strap is utilised by a large adult, or even an obese adult, the inflatable part of the lap strap will then no longer be located in front of the person using the lap strap, but instead will be located to one side.

The present invention seeks to provide an improved safety arrangement.

According to this invention there is provided a safety device for a vehicle seat, the safety device incorporating at least a lap strap, one end of the lap strap being provided with means adapted to be fixed to an anchoring point provided on one side of the seat, the other end of the lap strap being provided with means adapted to be releasable engaged with a buckle fixed to an anchoring point on the other side of the seat, the length of the lap strap being adjustable at the buckle side, there being a folded inflatable air-bag located on part of the lap strap, the air-bag being secured to the lap strap along that part of the lap strap on which the folded bag is located, the air-bag being configured such that, on inflation, part of the inflated bag will extend towards the said other end of the lap strap beyond the location of the bag when folded, the length and location of the folded air-bag being such that the folded air-bag will not engage the means to be releasably connected to the buckle, even when the lap strap is buckled and extends substantially tightly across the seat without an occupant in the seat, wherein the part of the lap strap carrying the air-bag, and also the part of the lap strap extending between the part of the lap strap carrying the air-bag and the said one end of the lap strap is relatively torsion-stiff, the part of the lap strap extending from the folded bag to the means to be releasably engaged by the buckle being torsion-weak.

The safety belt may comprise solely the lap strap or may comprise a seat-belt of the so-called three-point-linkage variety, that is to say a seat-belt which incorporates the lap strap, and incorporates a further strap part which extends from the means adapted to be releasably connected to the buckle to a further point located above a shoulder of an occupant of the seat.

Advantageously, the part of the lap strap that is torsion-stiff is provided with a reinforcing coating of a plastics material.

Conveniently, the part of the lap strap that is torsion-stiff lies adjacent a gas duct lead to the air-bag.

Preferably the distance between the part of the folded bag closest to the means to be releasably connected to the buckle, and the means to be releasably connected to the buckle, is at least one-quarter of the total length of the lap strap when the lap strap is buckled and extends substantially tightly across the seat without an occupant in the seat.

Advantageously the folded air-bag comprises an initially folded air-bag subjected to a final fold which folds part of the air-bag not fixed to the lap strap and extending towards the means adapted to be releasably connected to the buckle over the rest of the air-bag.

Conveniently the air-bag is constituted by two adjacent layers of fabric joined about their periphery, the initial folding process including the step of separating the two layers of fabric in a first region adjacent the lap strap and tucking part of the air-bag located further away from the lap strap, between the two separated layers.

Preferably the part of the air-bag furthest from the lap strap is tucked between the fabric layers of an intermediate region of the air-bag located between the first region and the said part of the air-bag.

Conveniently the initially folded bag is zig-zag folded so that the folded bag has a width substantially equal to the width of the lap strap.

Advantageously the folded air-bag has a length, measured along the lap strap, which is substantially equal to half of the length, measured in the direction of the lap strap of the unfolded, but inflated air-bag.

Conveniently the folded bag is covered by a flexible gaiter fixed to the lap strap.

Preferably the gaiter has one end thereof secured to the strap, the gaiter being in a position in which it embraces the lap strap and the folded air-bag.

Advantageously the size of the form of the air-bag is such that the air-bag, when inflated, will engage a rigid structure in front of the occupant of the seat within the vehicle.

Preferably the pressure inside the bag, when inflated, before the bag is hit by the occupant of the seat, is between 0.02 and 0.05 bar.

Conveniently the pressure is 0.03 bar.

In order that the invention may be more readily understood, and so that further features thereof may be appreciated, the invention will now be described, by way of example, with reference to the accompanying drawings in which:
FIGURE 1 is a diagrammatic perspective view of a lap strap forming one embodiment of the invention,
FIGURE 2 is a diagrammatic view illustrating a three-point safety-belt incorporating an embodiment of the invention prior to use,
FIGURE 3 is a view generally corresponding to Figure 2 showing the three-point belt in use with a 95 percentile dummy,
FIGURE 4 is a plan view of part of the safety device of an embodiment of the invention at an early stage in the manufacture thereof.
FIGURE 5 is a view corresponding to Figure 4 during a subsequent stage of manufacture,
FIGURE 6 is a sectional view taken on the line VI-VI of Figure 6,
FIGURE 7 is a view corresponding to Figure 6 during the subsequent stage of manufacture,
FIGURE 8 is a sectional view taken on the line VIII-VIII of Figure 7,
FIGURE 9 is a view corresponding to Figure 7 at a later stage of manufacture,
FIGURE 10 is a sectional view taken on the line X-X of Figure 11,
FIGURE 11 is a view corresponding to Figure 9 showing a subsequent stage,
FIGURE 12 is a subsequent view taken on the line XII-XII of Figure 11,
FIGURE 13 is a view corresponding to Figure 11 showing a subsequent stage,
FIGURE 14 is a sectional view taken on the line XIV-XIV of Figure 13,
FIGURE 15 is a view corresponding to Figure 14 showing a subsequent stage,
FIGURE 16 is a sectional view taken on the line XIV-XIV of Figure 13,
FIGURE 17 is a view corresponding to Figure 13 showing a subsequent stage,
FIGURE 18 is a view corresponding to part of Figure 3 illustrating the safety device ready for use,
FIGURE 19 is a perspective view showing the safety device in use,
FIGURE 20 is a top plan view of the safety device in use as shown in Figure 18 and 19,
FIGURE 21 is a view corresponding to Figure 20 showing the device with an alternative size of dummy, and
FIGURE 22 is a top plan view corresponding to Figure 21 showing the device in sue when the vehicle is undergoing substantial deceleration.

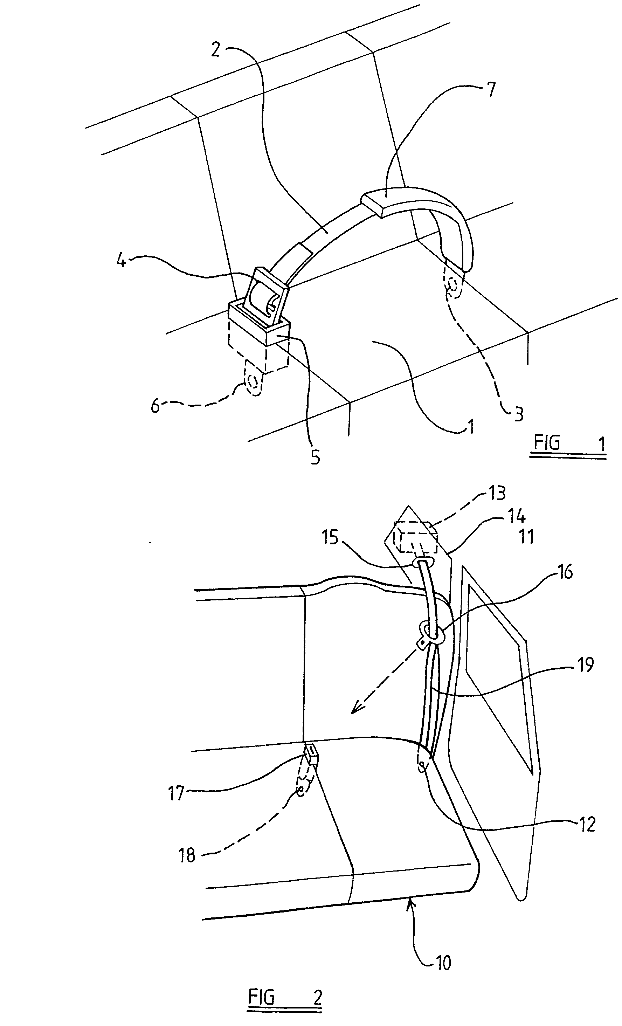

Referring initially to Figure 1 of the accompanying drawings, one embodiment of the present invention comprises a safety device intended to provide protection for the occupant of a seat 1 in a motor vehicle. The safety device of this embodiment comprises a simple lap belt 2, one end of which is connected to an anchoring point 3 adjacent one end of the seat, and the other end of which is provided with an adjustable tongue 4 adapted to be received within a buckle 5 provided with anchoring means 6 to anchor the buckle 5 to the vehicle. Provided on the lap belt 2 is a package 7 which contains an inflatable element or air-bag. The air-bag 7 is connected by means of a gas duct (not shown) to an inflator or gas generator. The gas generator is adapted to be activated in response to a signal from a sensor adapted to sense a predetermined deceleration of the vehicle, or an impact of the vehicle. The nature of the air-bag will be described hereinafter.

Figure 2 illustrates an alternative embodiment of the invention. In this embodiment of the invention a three-point safety-belt is provided. Figure 2 illustrates a rear seat 10 in a motor vehicle. A safety-belt 11 is provided, one end of which is anchored by an anchoring plate 12 to part of the vehicle adjacent the vehicle seat. The other end of the safety-belt 11 is connected to a retractor mechanism 13 mounted in position adjacent the back of the seat 10. A cover 14 is provided to conceal the retractor mechanism, the cover 14 having an aperture 15 to guide part of the safety-belt 11 as it freely slides.

A tongue 16 is mounted on the safety-belt 11 adapted to be received within a buckle 17. The buckle 17 is provided with mounting means 18 to enable the buckle to be mounted in position securely adjacent the side of the seat opposite to the anchoring plate 12.

Part of the safety-belt 11 adjacent the anchoring plate 12 is provided with a package 19 which contains an inflatable air-bag, generally as described above with reference to Figure 1.

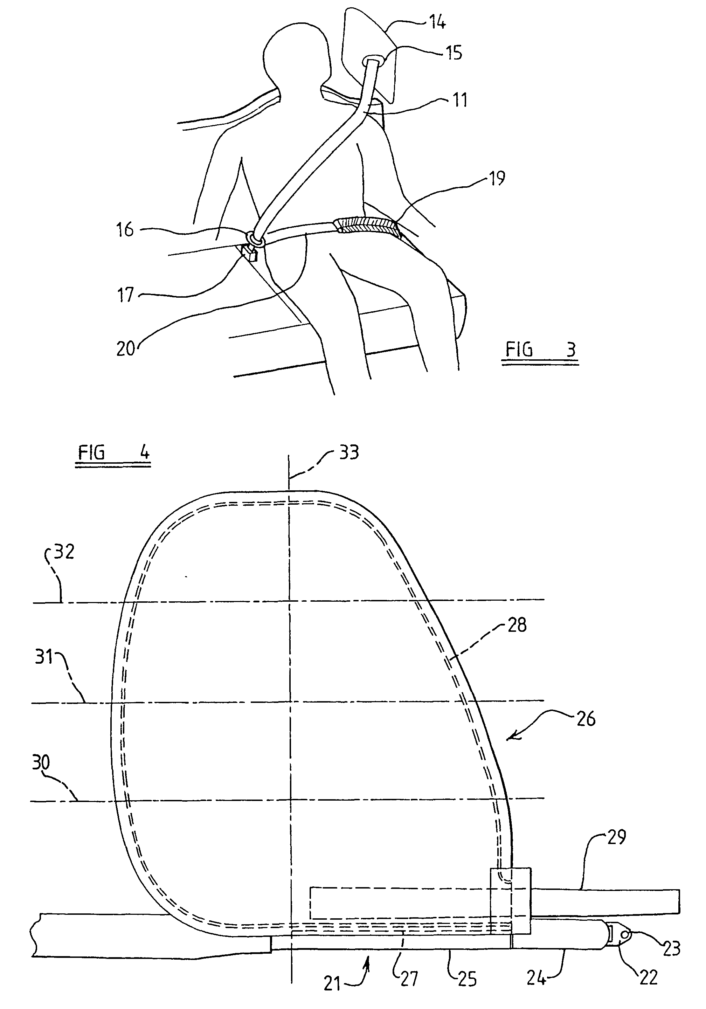

Figure 3 illustrates the safety-belt 11 of Figure 2 when in use. It can be seen that the part of the safety-belt 11 carrying the package 19 constitutes a lap strap 20 which extends from the anchorage 12 to the buckle 17. The rest of the safety-belt 11 constitutes a diagonal strap which extends from the buckle 17 to the aperture 15 provided in the cover 14.

It is to be appreciated that in the embodiment of Figure 1 and in the embodiment of Figures 2 to 3, a lap strap is provided which carries a package which contains an inflatable air-bag.

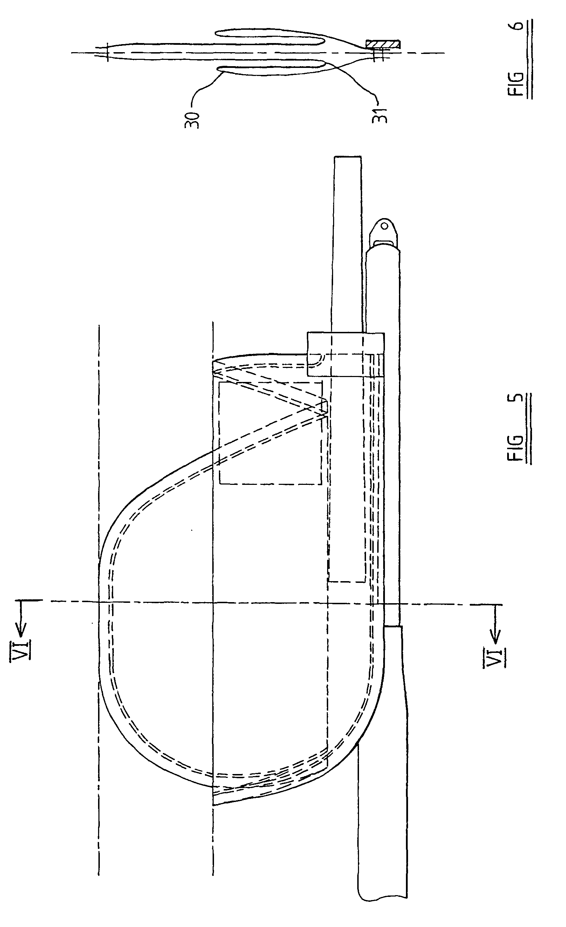

Figure 4 illustrates a terminal part of a safety-belt 21. The safety-belt 21 may be used as the safety-belt 2 of the embodiment of Figure 1 or as the safety-belt 11 of the embodiment of Figures 2 and 3. The safety-belt 21 is provided, at the free end thereof, with a mounting plate 22. The mounting plate 22 is provided with an aperture 23 to receive a bolt or the like to enable the mounting plate 22 to be firmly secured to an anchoring point provided in a motor vehicle. Typically the anchoring point will be adjacent one side of a vehicle seat. The safety-belt 1 that is connected to the anchoring plate is of a conventional form, but a first terminal region 24 of the belt, and the next adjacent region 25, are provided with a reinforcement, in the form of a coating of a plastics material, which serves to make that part of the safety-belt relatively torsion-stiff. Thus, the plastics material coating is itself relatively rigid, thus minimising any risk that the terminal portion 24, or the next adjacent portion 25 of the safety-belt will be able to "twist". Thus the plastics coating will keep this part of the safety-belt substantially "flat".

An inflatable element, in the form of an air-bag 26, is provided, an edge portion 27 of which is secured to the region 25 of the safety-belt adjacent the terminal region 24. Thus the terminal region 24 is not provided with any additional items, and the next adjacent region 25 carries the inflatable element 26. The region 27 of the inflatable element that is secured to the region 25 of the strap 21 constitutes only part of the lower edge of the inflatable element. Thus, the lower edge of the inflatable element extends, generally in alignment with the safety-belt 21, past the end of the stitching 27 which is remote from the anchoring plate 22. The inflatable element extends generally to one side of the safety-belt 21, with the inflatable element being substantially flat.

The inflatable element 26 is constituted by two super-imposed layers of fabric inter-connected by a peripheral seam 28. A gas duct 29 is provided which extends into the inflatable element 26. The gas duct 29 extends generally parallel with the safety-belt 21. The gas duct 29 is intended to be connected to a gas generator or inflator mounted on the vehicle at a point near the anchoring point on which the anchor plate 22 is mounted. The gas duct, being rigid, will add to the torsional stiffness of the belt 21 between the inflatable element 26 and the anchor plate 22.

Shown in Figure 4, for purposes of explanation, are three parallel chain lines 30, 31 and 32, which indicate where the inflatable element 26 will be folded during subsequent stages of the manufacture of the safety device, these parallel fold lines extending generally parallel with the axis of the safety-belt 21. A further chain line 33 indicates the line of a further subsequent fold, this chain only extending perpendicularly to the parallel fold lines 30, 31 and 32.

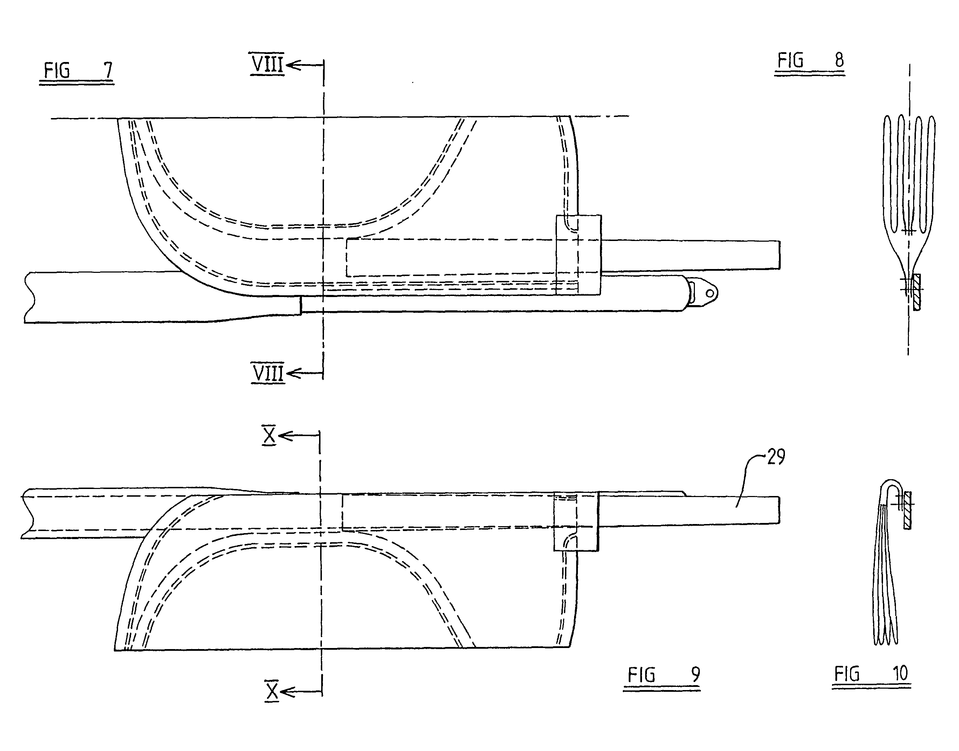

In an initial process stage, the two layers of fabric forming the inflatable element 26 are separated in a lower region thereof, and an intermediate part of the inflatable element is tucked downwardly into the lower-most region of the inflatable element. Thus, the air-bag is folded so that the part of the bag adjacent the fold-line 31 is moved downwardly, between the layers of fabric, until a situation is reached where the front and rear layers of fabric are each folded in a re-entrant fashion at the fold-line 30, and are again folded back on themselves at the fold-line 31. Thus each layer of fabric is individually zig-zag folded. The portion of the inflatable element 26 identified by the fold-line 32 of Figure 4 is thus brought into alignment with the fold-line 30. This is the situation shown in Figures 5 and 6 of the accompanying drawings.

Subsequently the part of the inflatable element above the fold-line 32 of Figure 4 is itself tucked downwardly between the layers of fabric that extend between the fold-lines 31 and 32. This is the situation shown in Figures 7 and 8 of the accompanying drawings.

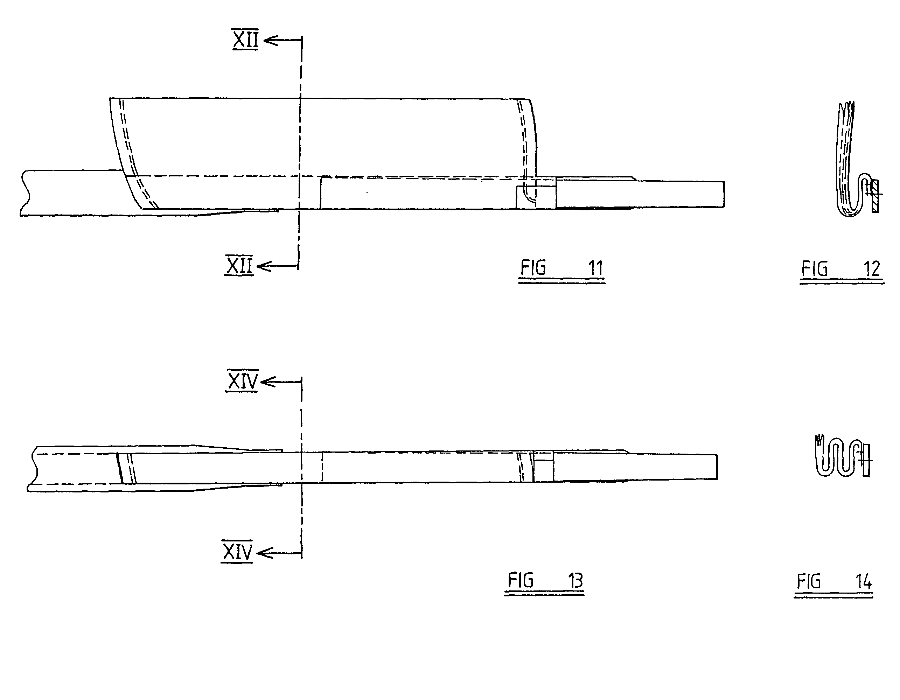

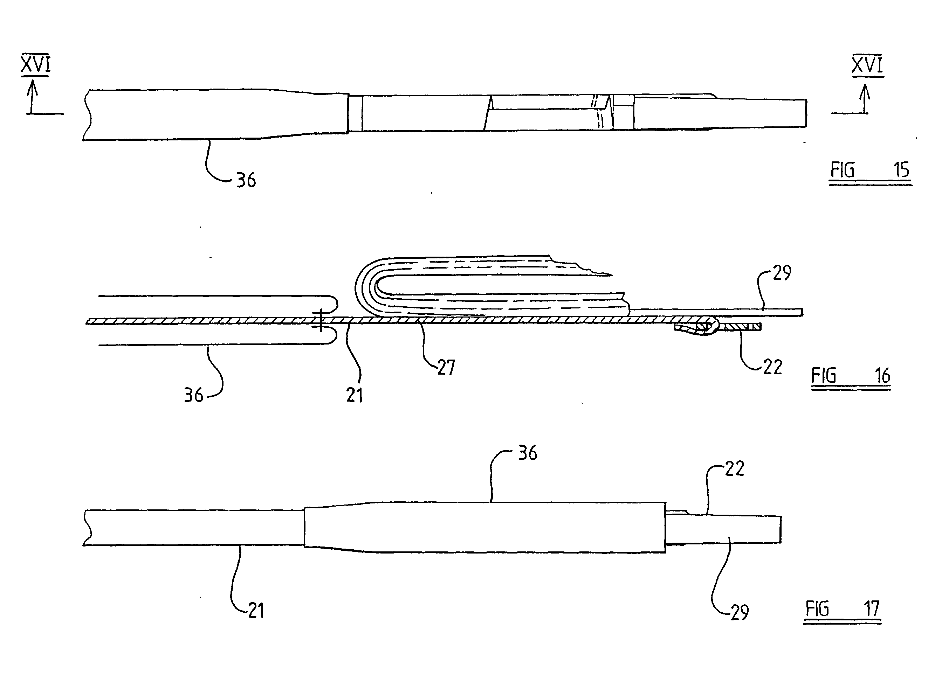

In a subsequent folding step, the entire inflatable element is folded so that the gas duct 29 overlies the safety-belt. This is the position shown in Figures 9 and 10. The inflatable element is now subjected as a complete entity, to zig-zag folding, with the spacing between adjacent folds being substantially equal to the width of the safety-belt 21. Thus, part of the inflatable element is folded to overlie the safety-belt and to extend again on the side of the safety-belt initially occupied by the inflatable element as shown in Figure 4. This is the position shown in Figure 11. Subsequently again part of the air-bag is folded back in the opposite direction, and the process is repeated until the air-bag is folded, with zig-zag folds, so that the entire air-bag overlies the safety-belt, as shown in Figures 13 and 14. As a final folding step, the part of the air-bag shown to the left of the fold-line 33 of Figure 4, that is to say the part of the air-bag beyond the end of the line of stitching 27 remote from the mounting plate 22, is folded back to overlie the rest of the folded air-bag, so that the entire folded bag overlies that part of the air-bag which is stitched, by stitching 27, to the safety-belt 21. This is the position shown in Figures 15 and 16.

A gaiter 36, which has an open end thereof secured to the safety-belt 21 at a point just beyond the end of the stitching 27 which secures the inflatable element to the safety-belt, and which is initially folded back to extend away from the inflatable element, is then drawn over the folded inflatable element to constitute a package containing the inflatable element. The gaiter 36 is made of a material adapted to break or rupture when subjected to a predetermined pressure.

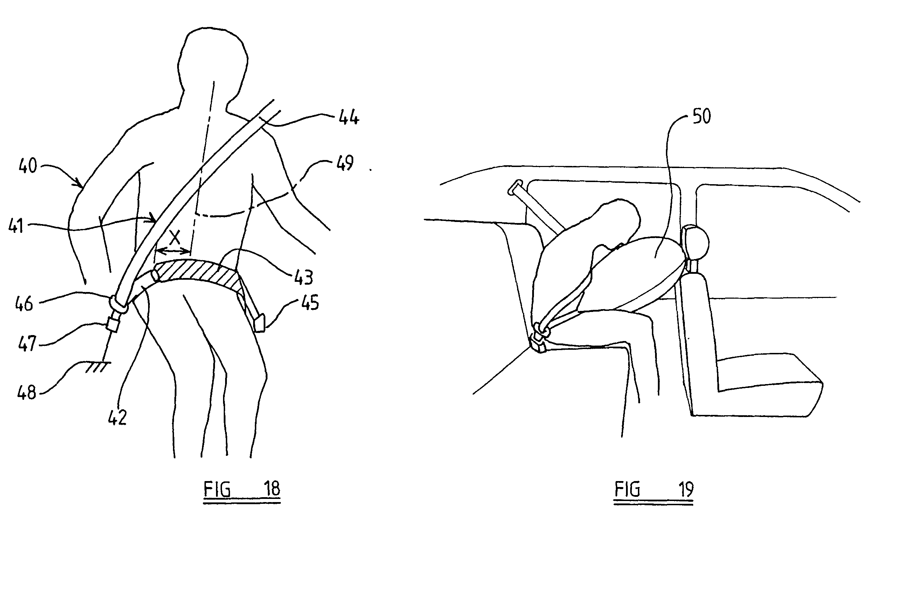

As can be seen from Figure 17, the gaiter 36 covers the terminal region 24 and the next adjacent region 25 of the safety-belt 21 which are provided with the plastics material coating, so as to be relatively torsion-stiff. The gas duct 29 is located adjacent the connecting plate 22. The gas duct may be of a relatively stiff material, and the gas duct may be connected to a gas generator mounted in position close to the anchoring point adapted to cooperate with the mounting plate 22. Thus the presence of the rigid gas duct may serve to enhance the torsion-stiffness of the terminal region 24 of the safety-belt 21.

The part of the safety-belt 21 not covered by the gaiter 36 is not provided with any coating or the like to make that part of the safety-belt torsion-stiff, and thus this part of the safety-belt may be considered to be torsion-weak.

Figure 18 illustrates a safety device 40 comprising a safety-belt 41 which comprises a three-point belt having a lap strap 42, which carries a package 43 containing an inflatable element of the type discussed above, and also a diagonal strap 44.

The lap strap extends between an anchorage 45 provided at one side of the seat, and a tongue 46 which co-operates with a buckle 47 which is connected to an anchoring point 48 provided at the other side of the seat. Typically the length of the lap strap 42 is between 500 and 700 millimetres, depending upon the size of the occupant of the seat. Of course, in extreme cases, the length of the lap strap may be less than 500 millimetres or more than 700 millimetres.

As shown in Figure 8 part of the package 43 containing the air-bag extends, by a distance "X" beyond a notional centre-line 49 of the occupant of the seat from the anchoring point 45. The distance X is 90 millimetres for a so-called 95 percentile dummy. A 95 percentile dummy is a dummy which is of such a size that 95% of the male population of the U.S.A. are of a smaller size. Thus the 95 percentile dummy corresponds to a relatively large man, with only a relatively small part of the population being larger. The distance X will typically be 140 millimetres for a 50th per cent isle dummy. A 50 percentile dummy has such a size that only 50 percentile of the male population of the U.S.A. are smaller.

The distance X will be 180 millimetres for a 5 percentile dummy. A 5 percentile dummy is such that only 5% of the male population of the U.S.A. are smaller.

It is to be appreciated, therefore, that the package 43 containing the inflatable element will extend beyond the mid point of an occupant of the seat in almost all cases, and also it is to be appreciated that the package does not extend as far as the tongue 46 connected to the buckle 47. Indeed, it is to be understood that the package 43 will not extend to the tongue 46 even if the safety-belt is secured and tightened with no occupant present in the seat. Thus the distance at the end of the package 43 which is remote from the anchoring point 45 is less than the distance, as followed by the lap strap 42, from the anchoring point 41 to the tongue 46 when the seat is not occupied and the safety-belt is in position and tightened.

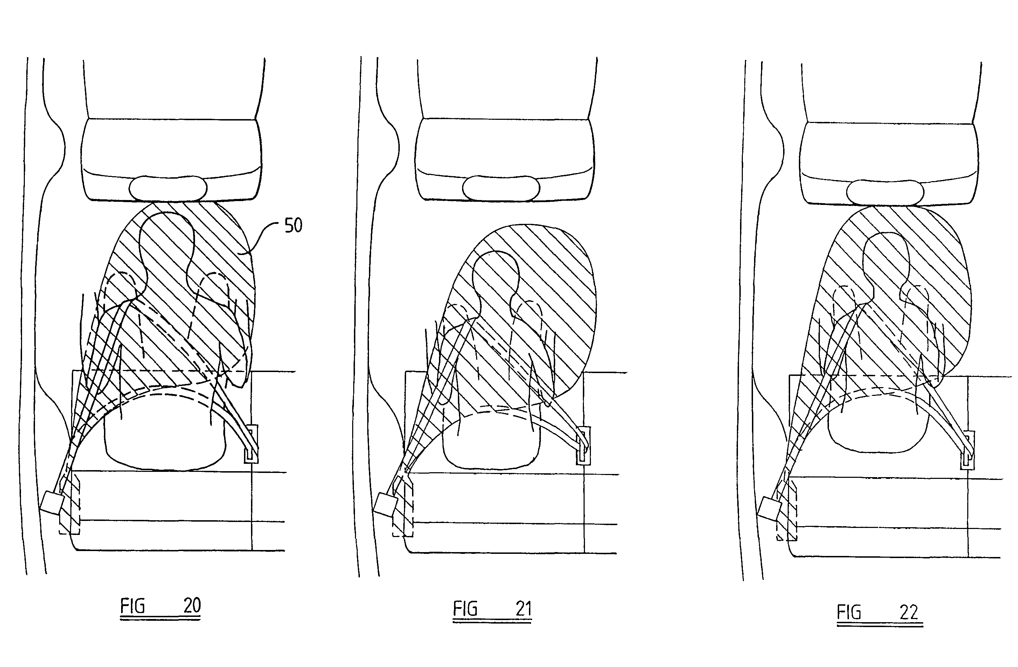

Turning now to Figures 19 and 20, it is to be appreciated that in the event that the sensor associated with the gas generator senses a deceleration in excess of a predetermined threshold or an impact, the gas generator is activated and gas will flow, through the gas duct, into the inflatable element within the package 43. The inflatable element will inflate to become an inflated cushion 50 located in front of the occupant of the seat. The inflated element, when viewed from above, is of substantially "drop"-shape.

The "drop"-shape inflated element has a relatively narrow portion located adjacent the end of the belt that is anchored to the motor vehicle, and has a relatively large bulbous portion which is spaced away from the end of the belt anchored to the vehicle and positioned to be located in front of the occupant of the seat. The size of the "drop"-shaped portion of the inflated element is such that as the occupant of the seat tends to bend forwardly, about the hips, in an accident situation, the head and torso of the occupant will impact with the bag.

Figure 20 shows that with a 95 percentile dummy, in an impact situation the main torso of the dummy is substantially aligned with the major area of the "drop"-shape inflated element.

The air-bag, when inflated, extends forwardly from the lap strap to occupy the space above the knees and in front of the thorax of the occupant of the seat. The air-bag has two critical dimensions. The first dimension is the distance from the centre point on the lap strap measured forwardly in a direction parallel with the longitudinal axis of the vehicle to the forward-most part of the air-bag. The second dimension that is of importance is the greatest substantially vertical thickness of the inflated air-bag, that is to say the distance between the lower-most fabric and the upper-most layer of fabric measured in a vertical line.

It is important that the first dimension, for each size of occupant of the seat, is such that as the torso and head of the occupant move forwardly in an accident situation, the head and torso of the occupant impact with the bag, with no part of the head or torso "overhanging" the bag. Also, it is preferred that the second dimension should also be related to the size of the occupant. If the occupant is large, and thus heavy, the occupant should impact with a "thicker" air-bag as compared with a smaller occupant. If a small occupant impacts with a very "thick" air-bag, the desired degree of protection may not be provided.

Thus the air-bag 50, as shown in Figures 19 and 20, is configured so that the first dimension and the second dimension of the air-bag when it is in use, depend upon the size of the person using the air-bag.

In the situation shown in Figure 20, where the seat-belt is utilised with a 95 percentile dummy, a substantial length of the seat-belt constitutes the lap strap. Thus the mid point of the lap strap is a substantial distance from the fixed end of the lap strap. The first dimension of the bag in front of this mid point of the seat-belt is substantial, to accommodate the very large torso-and-head combination of the dummy when thrown forwardly. Also the part of the air-bag in front of the dummy has a substantial thickness, so as to accommodate the substantial weight of the torso and head of the dummy in an accident situation.

Figure 21 is a figure corresponding to Figure 20 showing a 50 percentile dummy in a moderate crash. It can be seen that in this arrangement the dummy impacts the main inflated area of the air-bag, but the main point of impact between the dummy and the air-bag is that part of the air-bag which is closest to the end of the lap strap that is secured to the anchoring point on the motor vehicle. Because, in the situation shown in Figure 21, the dummy utilised is smaller than the dummy of Figure 20, the length of lap strap in use is less. Thus the mid point of the lap strap, in the situation shown in Figure 21, is located closer to the fixed end of the lap strap. Consequently, as can be seen, the first dimension of the air-bag in the situation shown in Figure 1 is less than the first dimension of the air-bag in the situation shown in Figure 20 as discussed above. However, the dimension is sufficiently large to accommodate the torso and head of the dummy utilising the safety device. In the arrangement shown in Figure 21, the second dimension, or thickness of the inflated air-bag in front of the dummy is less than the thickness of the part of the inflated air-bag in front of the dummy in the situation shown in Figure 20. This is appropriate, since the dummy of Figure 21 will have a lower weight than the dummy of Figure 20.

As shown in Figure 22, if a 50 percentile dummy is involved in a very severe crash, in which there is substantial deceleration of the vehicle, the dummy may move forwardly relative to the seat, thus stretching the lap strap, and in this situation the dummy impacts the central region of the inflated part of the inflatable element.

It is to be observed that there is a part of the safety-belt forming the lap strap which extends from the region 25 which carries the inflatable element to the tongue or to the anchorage which retains that part of the lap strap. This part of the lap strap is not reinforced in any way and is thus torsionally weak and is able to twist. If part of the lap strap is twisted in any way, the twist will always be located on this torsion-weak part of the lap strap. This will help ensure that the folded bag, retained by the torsionally stiff regions 24 and 25, will always be located on the side of the belt facing away from the occupant. The gas duct 29 will serve to increase the torsional stiffness of the region of the lap strap which carries the package containing the air-bag. The gas duct is provided at the end of the package closest to the anchoring plate 22, so that the gas duct may be connected to a gas generator which is mounted on the motor vehicle adjacent the anchorage to which the anchor plate 22 is connected.

It is preferred that the distance between the buckle and the end of the package containing the air-bag which is closest to the buckle, should be at least one-quarter of the total length of the lap strap between the buckle and the anchorage when the belt is buckled and stretched without there being an occupant on the seat. This helps to ensure that a reasonable number of twisting turns can be accommodated before the torsion-stiff part of the lap strap starts to twist.

It is preferred that the air-bag, as described above, should be inflated, before being hit by the occupant, to a pressure of between 0.02 and 0.05 bar, the most preferred pressure being 0.03 bar. A typical front air-bag in a motor vehicle, for example an air-bag mounted in the dashboard or in the steering-wheel, typically requires a pressure of 0.3 bar. This can make it very aggressive, especially when an occupant of the vehicle is in an out-of-position situation, thus being located very close to the air-bag when it begins to inflate. The described arrangement may be designed so that the air-bag is located in a desired position relative to the occupant, thus minimising the risk of injury to the occupant if the occupant is in an out-of-position situation. A much lower pressure can be used which makes the air-bag of the embodiments described above much less aggressive than air-bags typically found in motor vehicles. It is possible that in preferred embodiments of the invention, the size and form of the air-bag is such that the air-bag, when inflated, engages part of the rigid structure of the vehicle located in front of the occupant such as, as shown in Figure 9, the back of the seat in front of the occupant being protected by the air-bag 50. In the case of a front seat occupant, the air-bag may be designed to engage the dashboard of the vehicle. The bag will thus effectively be supported from the front as well as being retained on the lap strap by the stitching described above.

In the present specification "comprise" means "includes or consists of" and "comprising" means "including or consisting of'.

## Claims

1. A safety device for a vehide seat (1), the safety device comprising at least a lap strap (2), one end of the lap strap (2) being provided with means adapted to be fixed to an anchoring point (3) provided on one side of the seat (1), the other end of the lap strap (2) being provided with means (4) adapted to be releasably engaged with a buckle (5) fixed to an anchoring point (6) on the other side of the seat (1), the length of the lap strap (2) being adjustable at the buckle (5) side, there being a folded inflatable air-bag (26) located on part of the lap strap (2), the air-bag (26) being secured to the lap strap (2) along that part (25) of the lap strap (2) on which the folded bag (26) is located, the air-bag (26) being configured such that, on inflation, part of the inflated bag (26) will extend towards the said other end of the lap strap (2) beyond the location of the bag (26) when folded, the length and location of the folded air-bag (26) being such that the folded air-bag (26) will not engage the means (4) to be releasably connected to the buckle (5), even when the lap strap (2) is buckled and extends substantially tightly across the seat (1) without an occupant in the seat, **characterised in that** the part (25) of the lap strap (2) carrying the air-bag (26), and also the part (24) of the lap strap (2) extending between the part (25) of the lap strap (2) carrying the air-bag (26) and the said one end of the lap strap (2) is relatively torsion-stiff, the part of the lap strap (2) extending from the folded bag (26) to the means (4) to be releasably engaged by the buckle (5) being torsion-weak.

2. A device according to claim 1 having a safety-belt which comprises solely the lap strap (2).

3. A device according to claim 1 having a safety-belt comprising the lap strap (2), and comprising a further strap part which extends from the means adapted (4) to be releasably connected to the buckle (5) to a further point (13) located above a shoulder of an occupant of the seat (1).

4. A device according to any preceding claim, wherein the part of the lap strap (2) that is torsion-stiff is provided with a reinforcing coating of a plastics material.

5. A device according to any preceding daim wherein the part of the lap strap (2) that is torsion-stiff lies adjacent a gas duct (29) leading to the air-bag (26).

6. A device according to any one of the preceding claims wherein the distance between the part of the folded bag (26) closest to the means (4) to be releasably connected to the buckle (5), and the means (4) to be releasably connected to the buckle (5), is at least one-quarter of the total length of the lap strap (2) when the lap strap (2) is buckled and extends substantially tightly across the seat (1) without an occupant in the seat.

7. A device according to any one of the preceding claims wherein the folded air-bag (26) comprises an initially folded air-bag (26) subjected to a final fold which folds part of the air-bag (26) not fixed to the lap strap (2) and initially extending towards the means (4) adapted to be releasably connected to the buckle (5) over the rest of the air-bag (26).

8. A device according to any one of the preceding claims wherein the air-bag (26) is constituted by two adjacent layers of fabric joined about their periphery, the initial folding process including the step of separating the two layers of fabric in a first region adjacent the lap strap (2) and tucking part of the air-bag (26) located further away from the lap strap (2), between the two separated layers.

9. A device according to claim 8 wherein the part of the air-bag (26) furthest from the lap strap (2) is tucked between the fabric layers of an intermediate region of the air-bag (26) located between the first region and the said part of the air-bag (26).

10. A device according to any one of claims 7 to 9 wherein the initially folded bag (26) is zig-zag folded so that the folded bag (26) has a width substantially equal to the width of the lap strap (2).

11. A device according to any one of the preceding claims wherein the folded air-bag (26) has a length, measured along the lap strap (2), which is substantially equal to half of the length, measured in the direction of the lap strap (2) of the unfolded, but inflated air-bag (26).

12. A device according to any one of the preceding claims wherein the folded bag (26) is covered by a flexible gaiter (36) fixed to the lap strap (2).

13. A device according to any one of the preceding claims wherein the gaiter (36) has one end thereof secured to the strap (2), the gaiter (36) being in a position in which It embraces the lap strap (2) and the folded air-bag (26).

14. A device according to any one of the preceding claims wherein the size of the form of the air-bag (26) is such that the air-bag (26), when inflated, will engage a rigid structure in front of the occupant of the seat (1) within the vehicle.

15. A device according to any one of the preceding claims wherein the pressure inside the bag (26), when inflated, before the bag (26) is hit by the occupant of the seat (1), is between 0.02 and 0.05 bar.

16. A device according to claim 15 wherein the pressure is 0.03 bar.

## Patentansprüche

1. Sicherheitsvorrichtung für einen Pahrzeugsitz (1), wobei die Sicherheitsvorrichtung zumindest einen Beckengurt (2) umfaßt, wobei ein Ende des Beckengurts (2) mit einem Mittel versehen ist, des angepaßt ist, um an einem Verankerungspunkt (3) befestigt zu werden, der auf einer Seite des Sitzes (1) angeordnet ist, wobei das andere Ende des Beckengurts (2) mit einem Mittel (4) versehen ist, das angepaßt ist, um lösbar mit einem Gurtschloß (5) in Eingriff gebracht zu werden, welches an einem Verankerungspunkt (6) auf der anderen Seite des Sitzes (1) befestigt ist, wobei die Länge des Beckengurts (2) auf der Seite des Gurtschlosses (5) einstellbar ist, wobei ein gefalteter, aufblasbarer Airbag (26) auf einem Teil des Beckengurts (2) angeordnet ist, wobei der Airbag (26) an dem Beckengurt (2) entlang dem Teil (25) des Beckengurts (2) befestigt ist, auf dem sich der gefaltete Airbag (26) befindet, wobei der Airbag (26) so konfiguriert ist, daß sieb beim Aufblasen ein Teil des aufgeblasenen Airbags (26) in Richtung auf das genannte andere Ende des Beckengurts (2) jenseits des Ortes des Airbags (26), wenn dieser gefaltet ist, erstreckt, wobei die Länge und der Ort des gefalteten Airbags (26) so sind, daß der gefaltete Airbag (26) mit dem Mittel (4), das lösbar mit dem Gurtschluß (5) zu verbinden ist, nicht in Eingriff kommt, auch wenn der Beckengurt (2) geschlossen ist und sich im wesentlichen straff quer über den Sitz (1) erstreckt, ohne daß sich ein Insasse auf dem Sitz befindet, **dadurch gekennzeichnet, daß** der Teil (25) des Beckengurts (2), der den Airbag (26) trägt, und auch der Teil (24) des Beckengurts (2), der sich zwischen dem Teil (25) des Beckengurts (2), der den Airbag (26) trägt, und dem genannten einen Ende des Beckengurts (2) erstreckt, relativ torsionssteif ist, wobei der Teil des Beckengurts (2) der sich von dem gefalteten Airbag (26) bis zu dem Mittel (4) erstreckt, welches lösbar mit dem Gurtschluß (5) in Eingriff zu bringen ist, torsionsweich ist.

2. Vorrichtung nach Anspruch 1, **dadurch gekennzeichnet, daß** diese einen Sicherheitsgurt aufweist, der lediglich aus dem Beckengurt (2) besteht.

3. Vorrichtung nach Anspruch 1, **dadurch gekennzeichnet, daß** diese einen Sicherheitsgurt aufweist, der den Beckengurt (2) umfaßt, und einen weiteren Gurtteil umfaßt, der sich von dem Mittel (4), das angepaßt ist, lösbar mit dem Gurtschluß 5 verbunden zu werden, bis zu einem weiteren Punkt (13) erstreckt, der oberhalb einer Schulter eines Insassen des Sitzes (1) angeordnet ist.

4. Vorrichtung nach einem der vorangehenden Ansprüche, **dadurch gekennzeichnet, daß** der Teil des Beckengurts (2), der torsionssteif ist, mit einer verstärkenden Beschichtung aus einem Kunststoffmaterial versehen ist.

5. Vorrichtung nach einem der vorangehenden Ansprüche, **dadurch gekennzeichnet, daß** der Teil des Beckengurts (2), der torsionssteif ist, benachbart zu einem Gaskanal (29) angeordnet ist, der zu dem Airbag (26) führt.

6. Vorrichtung nach einem der vorangehenden Ansprüche, **dadurch gekennzeichnet, daß** der Abstand zwischen dem Teil des gefalteten Airbags (26), der zunächst an dem Mittel (4), das lösbar mit dem Gurtschluß (5) zu verbinden ist, angeordnet ist, und daß das Mittel (4), das lösbar mit dem Gurtschluß (5) zu verbinden ist, zumindest ein. Viertel der gesamten Länge des Beckengurts (2) beträgt, wenn der Beckengurt (2) geschlossen ist und sich im wesentlichen straff quer über den Sitz (1) erstreckt, ohne daß ein Insasse auf dem Sitz sitzt.

7. Vorrichtung nach einem der vorangehenden Ansprüche, **dadurch gekennzeichnet, daß** der gefaltete Airbag (26) einen im Ausgangszustand gefalteten Airbag (26) aufweist, der einer abschließenden Faltung unterworfen ist, bei der ein Teil des Airbags (26), der nicht an dem Beckengurt (2) befestigt ist und sich im Ausgangszustand in Richtung auf das Mittel (4) erstreckt, welches angepaßt ist, um lösbar mit dem Gurtschluß (5) verbunden zu werdon. über den Rost des Airbags (26) faltet.

8. Vorrichtung nach einem der vorangehenden Ansprüche, **dadurch gekennzeichnet, daß** der Airbag (26) durch zwei benachbarte Schichten aus Stoff gebildet ist, die entlang ihres Umfangs verbunden sind, wobei der anfängliche Faltvorgang den Schritt umfaßt, die beiden Schichten aus Stoff in einem ersten Bereich benachbart zu dem Beckengurt (2) zu trennen und einen Teil des Airbags (26), der sich weiter weg von dem Bockengurt (2) befindet, zwischen den beiden getrennten Schichten zu verstauen.

9. Vorrichtung nach Anspruch 8, **dadurch gekennzeichnet, daß** der Teil des Airbags (26), der am weitesten entfernt von dem Beckengurt (2) liegt, zwischen den Stoffschichten eines mittleren Bereichs des Airbags (26) verstaut wird, der sich zwischen dem ersten Bereich und dem genannten Teil des Airbags (26) befindet.

10. Vorrichtung nach einem dor Ansprüche 7 bis 9, **dadurch gekennzeichnet, daß** der anfänglich gefaltete Airbag (26) zickzackförmig gefaltet ist, so daß der gefaltete Airbag (26) eine Breite aufweist, die im wesentlichen gleich der Breite des Beckengurts (2) ist.

11. Vorrichtung nach einem der vorangehenden Ansprüche, **dadurch gekennzeichnet, daß** der gefaltete Airbag (26) eine Länge aufweist, gemessen entlang des Beckengurts (2), die im wesentlichen gleich der Hälfte der Länge des nicht gefalteten, aber aufgeblasenen Airbags (26) ist, gemessen in der Richtung des Beckengurts (2).

12. Vorrichtung nach einem der vorangehenden Ansprüche, **dadurch gekennzeichnet, daß** der gefaltete Airbag (26) durch eine flexible Schutzumhüllung (36) abgedeckt ist, die an dem Beckengurt (2) befestigt ist.

13. Vorrichtung nach einem der vorangehenden Ansprüche, **dadurch gekennzeichnet, daß** die Schutzumhüllung (36) mit einem Ende davon an dem Gurt (2) befestigt ist, wobei die Schutzumhüllung (36) sich in einer Position befindet, in der sie den Beckengurt (2) und den gefalteten Airbag (26) umgreift.

14. Vorrichtung nach einem der vorangehenden Ansprüche, **dadurch gekennzeichnet, daß** die Größe der Form des Airbags (26) so ist, daß der Airbag (26), wenn er aufgeblasen ist, mit einer starren Struktur vor dem Insessen des Sitzes (1) innerhalb des Fahrzeugs zusammenwirkt.

15. Vorrichtung nach einem der vorangehenden Ansprüche, **dadurch gekennzeichnet, daß** des Druck innerhalb des Airbags (26), wenn dieser aufgeblasen ist, bevor der Insasse des Sitzes (1) auf den Airbag (26) auftrifft, zwischen 0,02 und 0,05 bar beträgt.

16. Vorrichtung nach Anspruch 15, **dadurch gekennzeichnet, daß** der Druck 0,03 bar beträgt.

## Revendications

1. Dispositif de sécurité pour un siège de véhicule (1), le dispositif de sécurité comprenant au moins un morceau de sangle (2), une extrémité du morceau de sangle (2) étant pourvue de moyens adaptés à être fixés à un point d'ancrage (3) prévu sur un côté du siège (1), l'autre extrémité du morceau de sangle (2) étant pourvue de moyens (4) adaptés à être engagés de façon libérable avec une boucle (5) fixée à un point d'ancrage (6) de l'autre côté du siège (1), la longueur du morceau de sangle (2) étant ajustable du côté de la boucle (5), il est prévu un airbag gonflable (26) plié situé sur une partie du morceau de sangle (2), l'airbag (26) étant fixé sur le morceau de sangle (2) le long de cette partie (25) du morceau de sangle (2) sur laquelle est localisé l'airbag (26) plié, l'airbag (26) étant configuré de telle façon que, lors du gonflage, une partie de l'airbag gonflé (26) va s'étendre vers ladite autre extrémité du morceau de sangle (2) au-delà de l'emplacement de l'airbag (26) quand ils est plié, la longueur et l'emplacement de l'airbag plié (26) étant tels que l'airbag plié (26) ne va pas engager les moyens (4) adaptés à être connectés de façon libérable avec la boucle (5) même lorsque le morceau de sangle (2) est bouclé et s'étend sensiblement de façon tendue à travers le siège (1) en l'absence d'un occupant dans le siège, **caractérisé en ce que** la partie (25) du morceau de sangle (2) qui porte l'airbag (26), de même que la partie (24) du morceau de sangle (2) qui s'étend entre la partie (25) du morceau de sangle (2) portant l'airbag (26) et ladite extrémité du morceau de sangle (2) est relativement rigide vis-à-vis de la torsion, et la partie du morceau de sangle (2) qui s'étend depuis l'airbag plié (26) jusqu'aux moyens (4) destinés à être engagés de façon libérable avec la boucle (5) est faible vis-à-vis de la torsion.

2. Dispositif selon la revendication 1, comprenant une ceinture de sécurité qui comprend uniquement le morceau de sangle (2).

3. Dispositif selon la revendication 1, comprenant une ceinture de sécurité comprenant le morceau de sangle (2) et comprenant un autre morceau de sangle qui s'étend depuis les moyens (4) adaptés à être connectés de façon libérable à la boucle (5) jusqu'à un autre point (13) situé au-dessus d'une épaule d'un occupant du siège (1).

4. Dispositif selon l'une quelconque des revendications précédentes, dans lequel la partie du morceau de sangle (2) qui est rigide vis-à-vis de la torsion est pourvue d'un revêtement de renforcement en matière plastique.

5. Dispositif selon l'une quelconque des revendications précédentes, dans lequel la partie du morceau de sangle (2) qui est rigide vis-à-vis de la torsion est disposée adjacente à un conduit de gaz (29) qui mène à l'airbag (26).

6. Dispositif selon l'une quelconque des revendications précédentes, dans lequel la distance entre la partie de l'airbag plié (26) la plus proche des moyens (4) adaptés à être connectés de façon libérable à la boucle (5) et les moyens (4) destinés à être connectés de façon libérable à la boucle (5), est d'au moins un quart de la longueur totale du morceau de sangle (2) quand le morceau de sangle (2) est bouclé et s'étend sensiblement de façon tendue à travers le siège (1) en l'absence d'un occupant dans le siège.

7. Dispositif selon l'une quelconque des revendications précédentes, dans lequel l'airbag plié (26) comprend un airbag initialement plié (26) soumis à un pliage final qui replie une partie de l'airbag (26) qui n'est pas fixée au morceau de sangle (2) et s'étendant initialement vers les moyens (4) adaptés à être connectés de façon libérable à la boucle (5) par-dessus le reste de l'airbag (26).

8. Dispositif selon l'une quelconque des revendications précédentes, dans lequel l'airbag (26) est constitué par deux couches adjacentes de tissus jointes autour de leur périphérie, le processus de pliage initial incluant l'opération qui consiste à séparer les deux couches de tissu dans une première région adjacente au morceau de sangle (2), et à tasser une partie de l'airbag (26) située plus loin du morceau de sangle (2) entre les deux couches séparées.

9. Dispositif selon la revendication 8, dans lequel la partie de l'airbag (26) la plus éloignée du morceau de sangle (2) est tassée entre les couches de tissu d'une région intermédiaire de l'airbag (26) située entre la première région et ladite partie de l'airbag (26).

10. Dispositif selon l'une quelconque des revendications 7 à 9, dans lequel l'airbag initialement plié (26) est plié en zigzag de sorte que l'airbag plié (26) a une largeur sensiblement égale à la largeur du morceau de sangle (2).

11. Dispositif selon l'une quelconque des revendications précédentes, dans lequel l'airbag plié (26) a une longueur, mesurée le long du morceau de sangle (2), qui est sensiblement égale à la moitié de la longueur, mesurée dans la direction du morceau de sangle (2), de l'airbag déplié et gonflé (26).

12. Dispositif selon l'une quelconque des revendications précédentes, dans lequel l'airbag plié (26) est couvert d'une gaine flexible (36) fixée sur le morceau de sangle (2).

13. Dispositif selon l'une quelconque des revendications précédentes, dans lequel la gaine (36) est fixée par une extrémité sur la sangle (2), la gaine (36) étant dans une position dans laquelle elle enferme le morceau de sangle (2) et l'airbag plié (26).

14. Dispositif selon l'une quelconque des revendications précédentes, dans lequel la taille de la forme de l'airbag (26) est telle que l'airbag (26), lorsqu'il est gonflé, va engager une structure rigide en face de l'occupant du siège (1) dans le véhicule.

15. Dispositif selon l'une quelconque des revendications précédentes, dans lequel la pression à l'intérieur de l'airbag (26), lorsqu'il est gonflé et avant que l'airbag (26) soit heurté par l'occupant du siège (1), est entre 0,02 et 0,05 bar.

16. Dispositif selon la revendication 15, dans lequel la pression est de 0,03 bar.
